# EUROPEAN PATENT SPECIFICATION

(11) **EP 3 547 421 B1**
(45) Date of publication and mention of the grant of the patent: **03.12.2025**
(21) Application number: 17874572.5
(22) Date of filing: 26.05.2017
(51) Int. Cl.: C01G 23/00, H01M 4/485

(54) **PREPARATION METHOD OF A LITHIUM TITANIUM COMPOSITE OXIDE**
HERSTELLUNGSVERFAHREN EINES LITHIUM-TITAN-VERBUNDOXIDS
PROCÉDÉ DE PRÉPARATION D`UN OXYDE COMPOSITE DE LITHIUM-TITANE

(30) Priority: 22.11.2016 KR 20160155628
(43) Date of publication of application: 02.10.2019
(73) Proprietor: POSCO Chemical Co., Ltd, Gyeongsangbuk-do 37918 (KR)
(72) Inventor: CHOI, Su Bong, Gumi-si Gyeongsangbuk-do 39178 (KR); KANG, Chun Gu, Seoul 03906 (KR); CHOI, Jeong Eun, Goesan-gun Chungcheongbuk-do 28010 (KR); JEONG, Seung Chang, Andong-si Gyeongsangbuk-do 36738 (KR); LEE, Jae An, Gumi-si Gyeongsangbuk-do 39205 (KR); KIM, Jeong Han, Gumi-si Gyeongsangbuk-do 39184 (KR)
(74) Representative: JD&P Patent Attorneys Joanna Dargiewicz & Partners
(86) International application number: PCT/KR2017/005538
(87) International publication number: WO 2018/097429

(56) References cited:
- EP-A1- 3 006 403
- WO-A1-2012/169331
- JP-B2- 3 946 389
- KR-A- 20130 097 733
- KR-A- 20140 074 051
- KR-A- 20140 137 720
- KR-A- 20160 070 560
- US-A1- 2011 086 275
- US-A1- 2016 126 545
- US-B2- 8 758 940
- NAKAHARA K ET AL: "Preparation of particulate Li"4Ti"5O"1"2 having excellent characteristics as an electrode active material for power storage cells", JOURNAL OF POWER SOURCES, ELSEVIER SA, CH, vol. 117, no. 1-2, 15 May 2003 (2003-05-15), pages 131 - 136, XP004423377, ISSN: 0378-7753, DOI: 10.1016/S0378-7753(03)00169-1
- YI TING-FENG ET AL: "Spinel Li4Ti5-xZrxO12(0<=x<=0.25) materials as high-performance anode materials for lithium-ion batteries", JOURNAL OF ALLOYS AND COMPOUNDS, ELSEVIER SEQUOIA, LAUSANNE, CH, vol. 558, 16 January 2013 (2013-01-16), pages 11 - 17, XP028986898, ISSN: 0925-8388, DOI: 10.1016/J.JALLCOM.2013.01.018

## Description

### BACKGROUND OF THE INVENTION

### Field of the invention

The present invention relates to a preparation method for a lithium-titanium complex oxide which maintains appropriate pores within particles by adding a pore inducing material in the wet-milling step, and which is prepared by adjusting sizes of primary particles of the lithium-titanium complex oxide.

### Related Art

Secondary batteries have currently been used as a primary power source in an energy storage technology applying field such as a mobile phone, a camcorder, a notebook PC, and an electric vehicle. Application ranges of such secondary batteries are being gradually expanded from a nanoscaled micro device to a power storage device for a movable device such as a notebook computer, and an electric vehicle and a smart grid.

Recently, lithium ion secondary batteries have been spotlighted in electric vehicle and power storage fields, and more excellent electrochemical characteristics of the secondary batteries are required in order to use the secondary batteries in such fields.

Particularly, a lithium-titanium complex oxide having a high Li occlusion/release electric potential has been receiving attention, and typical examples of the lithium-titanium complex oxide (LTO) include Li_{4/3}Ti_{5/3}O₄, LiTi₂O₄, and Li₂TiO₃. Since this material has conventionally been used as a cathode active material, and can be also used as an anode active material, the future of this material as the cathode and anode active materials of batteries is expected. Electrolyte decomposition is rarely generated in the lithium-titanium complex oxide, and the lithium-titanium complex oxide has excellent cycle characteristics due to structural stability since an oxidation/reduction potential of an anode is about 1.5 V which is a relatively high value with respect to an electric potential of Li/Li⁺ in the lithium-titanium complex oxide as a material having a spinel structure that is a typical oxide in which intercalation or deintercalation of lithium occurs in a state that a crystal structure is maintained

For example, as a conventional lithium titanate (Li₄Ti₅O₁₂) preparation method which is the most common, a method of calcining the mixture at 800 °C or more in an oxygen atmosphere by mixing Anatase titanium dioxide with lithium hydroxide has been known as described in Japanese Patent Laid-Open Publication No. Hei 07-320784, Japanese Patent Laid-Open Publication No. 2001-192208, etc. Lithium titanate is easily handled due to a low viscosity during preparation of an electrode mixture slurry since lithium titanate which can be obtained by this preparation method has a relatively low specific surface area of 10 m²/g or less. Further, when manufacturing the lithium ion secondary batteries using lithium titanate that can be obtained by the above-described preparation method, it is difficult that cycle deterioration of the lithium ion secondary batteries occurs, and the lithium ion secondary batteries have high safety. However, since capacity deterioration of the above-described lithium ion secondary batteries during high power charging and discharging is great, i.e., rate performance of the lithium ion secondary batteries is lower, it is difficult to applying the lithium ion secondary batteries to on-vehicle applications and the like

Further, although the lithium-titanium complex oxide has an advantage of excellent rapid charging or low temperature performance since metal lithium is not precipitated in principle at a lithium occlusion/release electric potential, the lithium-titanium complex oxide has disadvantages of a low capacity per unit weight and a low energy density.
US 2016/126545 A1 discloses the preparation of pure-phase doped and undoped lithium titanate Li4 Ti50 12. Dopants are AI, Mg, Ga, Fe, Co, Sc, Y, Mn, Ni, Cr, V or mixtures thereof. The term "phase-pure" or "phase-pure lithium titanate" means according to 01 that only residuals of rutile, anatase or Li2 Ti03 in an amount of <3% are detectable via XRD. The resulting values of BET range between 5-12 m2/g. The process for the preparation of said composite oxide comprises the steps of providing an aqueous solution of a lithium source being LiOH, reacting the aqueous solution by adding solid Ti02 and a carbon source to form a slurry at a temperature in the range from 120-180° C, spray-drying the slurry at an entry temperature of 250-450°C and an exit temperature of 110°-120°C, calcining at 750°C.

In order to solve these problems, it is required to develop an active material which has a low internal resistance and a high electrical conductivity and is excellent in output characteristics while complementing the disadvantages of the lithium-titanium complex oxide.

### SUMMARY OF THE INVENTION

In order to solve above-mentioned problems, an objective of the present invention is to provide a novel preparation method of a lithium-titanium complex oxide, the preparation method comprising adding a pore inducing material for forming appropriate pores within particles produced while controlling particle sizes of a slurry in the preparation process.

In order to achieve the objectives, the present invention provides a preparation method of the lithium-titanium complex oxide having a molar ratio of lithium to titanium (Li/Ti ratio) of 0 80 to 0.85.

The lithium-titanium complex oxide obtained by the preparation method according to the present invention comprises 5 wt% or less of a rutile-type titanium oxide. Namely, the rutile-type titanium oxide is contained in the lithium-titanium complex oxide in an amount of 5 wt% or less with respect to 100 parts by weight of the entire lithium-titanium complex oxide. Inherently, a portion of spinel type lithium titanate is phase separated into a rutile-type TiO₂(r-TiO₂) during the preparation process. This rutile-type TiO₂(r-TiO₂) has a problem of decreasing an effective capacity of lithium titanate obtained since the rutile-type TiO₂(r-TiO₂) has a low reaction speed, an inclined potential curve and a small capacity although the rutile-type TiO₂(r-TiO₂) is electrochemically active by having a rock salt structure. An amount of the rutile-type titanium oxide contained in the lithium-titanium complex oxide according to the present invention is adjusted to 5 wt% or less.

The lithium-titanium complex oxide obtained according to the present invention comprises 0.05 mol/L or less of Zr.

The lithium-titanium complex oxide obtained according to the present invention has a Brunauer-Emmett-Teller (BET) surface areas of 4.3 m²/g or more, a tap density of 1.0 g/cm³ or more, and a pellet density of 1.75 g/cm³ or more.

The tap density of the lithium-titanium complex oxide obtained according to the present invention means a value obtained when performing a tapping process 3,000 times after injecting a sample into INTEC ARD-200 equipment, and the pellet density of the lithium-titanium complex oxide according to the present invention means a value obtained when performing a pressurizing process using a pressure of 1.6 ton after injecting 1 g of a sample into Carver Modal-4350 equipment.

The present invention provides a preparation method of the lithium-titanium complex oxide according to the present invention comprising:
a first step of solid phase-mixing a pore inducing compound, a titanium compound, and a Zr-containing compound at a stoichiometric ratio to obtain a solid phase mixture;
a second step of preparing a slurry in which primary particles are dispersed by dispersing the solid phase mixture in a solvent and wet-milling the solid phase mixture dispersed in the solvent;
a third step of forming secondary particles by spray drying the slurry;
a fourth step of mixing the spray dried particles with a lithium-containing compound to obtain lithium compound-mixed particles;
a fifth step of calcining the lithium compound-mixed particles to obtain calcined particles; and
a sixth step of classifying the calcined particles,
wherein the pore inducing compound comprises one or more selected from lithium carbonate (Li₂CO₃), sodium bicarbonate (NaHCO₃), and potassium carbonate (K₂CO₃),
the primary particle in the second step has an average particle diameter D50 of 0.05 to 0.2 µm, and
the sixth step comprises classifying the calcined particles to a particle size corresponding to a sieve size of 200 to 400 meshes

In the preparation method according to the present invention, the titanium compound is one or more selected from the group consisting of titanium dioxide (TiO2), titanium chloride, titanium sulfide, and titanium hydroxide.

In the preparation method according to the present invention, the wet-milling process in the second step comprises wet-milling the solid phase mixture dispersed in the solvent by using water as the solvent and using zirconia beads having a rotational speed of 2,000 to 5,000 rpm.

In the preparation method according to the present invention, the zirconia beads have a particle diameter of 0.1 to 0.3 mm.

In the preparation method according to the present invention, the third step of performing the spray drying process comprises spray drying the slurry at a hot air input temperature of 200 to 300 °C and a hot air exhaust temperature of 100 to 150 °C.

In the preparation method according to the present invention, the second particles obtained by spray drying the slurry in the third step have a diameter D₅₀ of 5 to 20 µm.

In the preparation method according to the present invention, the lithium-containing compound in the fourth step is lithium hydroxide (LiOH) or lithium carbonate (Li₃CO₂).

In the preparation method according to the present invention, the calcination process in the fifth step is performed at a temperature of 700 to 800 °C in an air atmosphere for 10 to 20 hours.

In the preparation method according to the present invention, density and initial capacity are lowered when the calcination process is performed at a temperature of 700 °C or less while specific surface area is decreased, and rate properties are lowered when the calcination process is performed at a temperature of 800 °C or more.

### BRIEF DESCRIPTION OF THE DRAWINGS

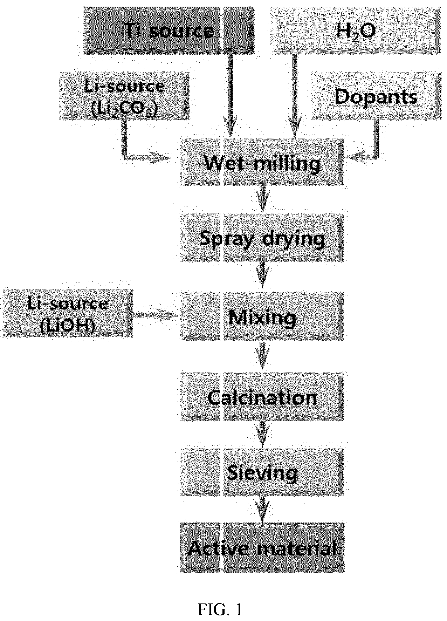

FIG. 1 is a schematic diagram illustrating a preparation method according to the present invention.
FIG. 2 shows SEM (Scanning Electron Microscope) results of lithium-titanium complex oxides prepared in Comparative Example 1 and Examples 1 to 6 of the present invention.
FIG. 3 shows SEM results of cross-sections of the lithium-titanium complex oxides prepared in Comparative Example 1 and Examples 1 to 6 of the present invention.
FIG. 4 shows SEM results of active materials after analyzing pellet densities of active materials prepared in Comparative Example 1 and Examples 1 to 6 of the present invention.

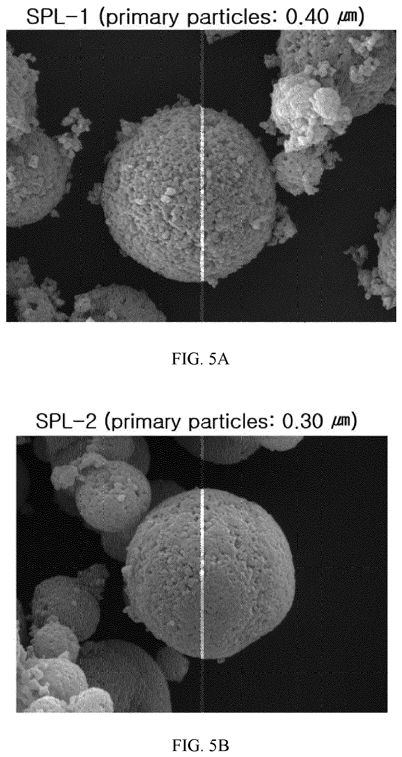

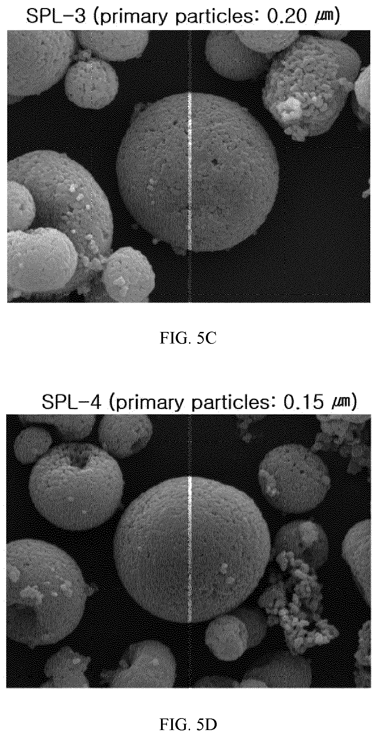

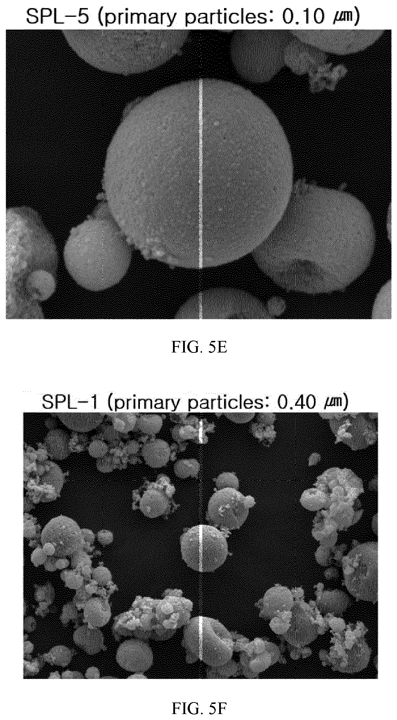

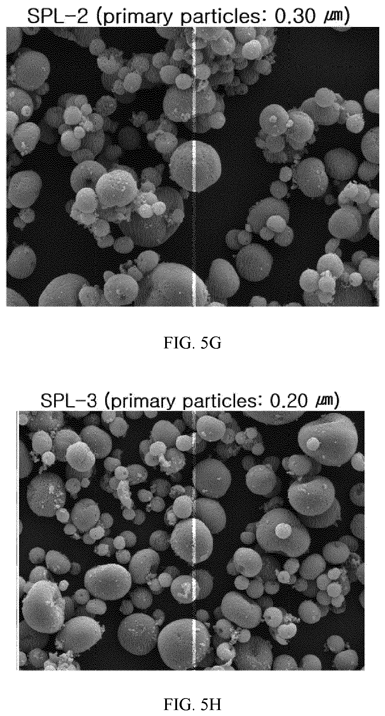

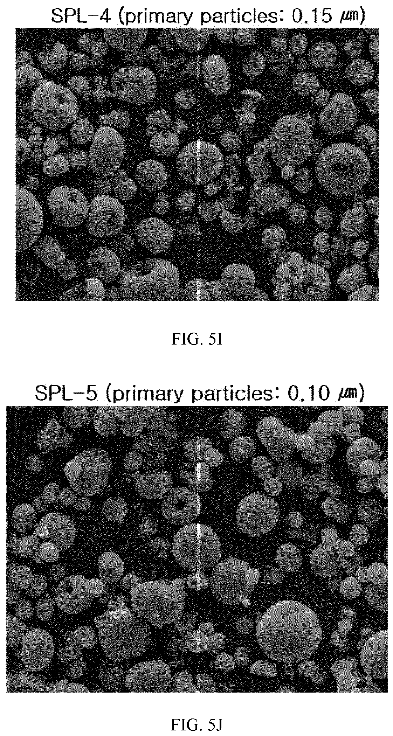

FIG. 5 shows SEM results of secondary particles of lithium-titanium complex oxides which are prepared in particle size-controlled primary particles by Comparative Examples 2 to 6 according to the present invention.

### DESCRIPTION OF EXEMPLARY EMBODIMENTS

Hereinafter, the present invention is described more in detail by Examples. However, the present invention is not limited by the following Examples.

### <Examples 1 to 18> Preparation of pore inducing compound-added lithium-titanium complex oxides

After obtaining solid phase mixtures by solid phase-mixing titanium oxide as a starting material, lithium carbonate as a pore inducing compound, and zirconium oxide as a dissimilar metal, the solid phase mixtures were stirred and dissolved in water to obtain mixtures. The mixtures were designed such that molar ratios of lithium contents to titanium contents (Li/Ti ratios) became 0.81 by adjusting equivalent weights of lithium carbonates compared to lithium hydroxides.

After wet-milling particles of the mixtures into primary particles having an average particle diameter of 0.12 µm at a milling speed of 4,200 rpm using zirconia beads to prepare slurries, spray drying the slurries at a hot air input temperature of 250 °C and a hot air exhaust temperature of 110 °C, and adding lithium hydroxide to the spray dried slurries to mix lithium hydroxide with the spray dried slurries at a rotational speed 700 rpm for 10 minutes using a Herschel mixer, active materials were prepared by calcining the mixtures at 750 to 780 °C to obtain calcined products and classifying the calcined products using a sieve having a sieve size corresponding to 325 meshes.

**[Table 1]**

| Classification | LiOH : Li₂CO₃ | Calcination temperature |
|---|---|---|
| Example 1 | 90 : 10 | 750 °C |
| Example 2 | 70 : 30 | 750 °C |
| Example 3 | 50 : 50 | 750 °C |
| Example 4 | 30 : 70 | 750 °C |
| Example 5 | 10 : 90 | 750 °C |
| Example 6 | 0 : 100 | 750 °C |
| Example 7 | 95 : 5 | 760 °C |
| Example 8 | 90 : 10 | 760 °C |
| Example 9 | 85 : 15 | 760 °C |
| Example 10 | 80 : 20 | 760 °C |
| Example 11 | 95 : 5 | 770 °C |
| Example 12 | 90 : 10 | 770 °C |
| Example 13 | 85 : 15 | 770 °C |
| Example 14 | 80 : 20 | 770 °C |
| Example 15 | 95 : 5 | 780 °C |
| Example 16 | 90 : 10 | 780 °C |
| Example 17 | 85 : 15 | 780 °C |
| Example 18 | 80 : 20 | 780 °C |

### <Comparative Example 1> Preparation of a lithium-titanium complex oxide

After obtaining a solid phase mixture by solid phase-mixing 0.01 mol of titanium oxide and zirconium hydroxide as starting materials without adding a pore inducing compound, a mixture was obtained by stirring the solid phase mixture in water, thereby dissolving the solid phase mixture in water.

After wet-milling particles of the mixture into primary particles having an average particle diameter of 0.12 µm at a milling speed of 4,200 rpm using zirconia beads having a particle diameter of 0.1 mm to prepare a slurry, spray drying the slurry at a hot air input temperature of 250 °C and a hot air exhaust temperature of 110 °C, and adding lithium hydroxide to the spray dried slurry to mix lithium hydroxide with the spray dried slurry at a rotational speed 700 rpm for 10 minutes using a Herschel mixer, an active material was prepared by calcining the mixture at 750 °C to obtain a calcined product and classifying the calcined product using a sieve having a sieve size corresponding to 325 meshes.

### <Comparative Examples 2 to 6> Preparation of lithium-titanium complexes of which primary particles are particle size-controlled bv wet-milling

After obtaining solid phase mixtures by solid phase-mixing 0.01 mol of titanium oxide and zirconium hydroxide as starting materials without adding a pore inducing compound, mixtures were obtained by stirring the solid phase mixtures in water, thereby dissolving the solid phase mixtures in water.

After wet-milling particles of the mixtures into primary particles having average particle diameters of 0.40 µm, 0.30 µm, 0.20 µm, 0.15 µm and 0.10 µm using zirconia beads having a particle diameter of 0.1 mm to prepare slurries, spray drying the slurries at a hot air input temperature of 250 °C and a hot air exhaust temperature of 110 °C, and adding lithium hydroxide to the spray dried slurries to mix lithium hydroxide with the spray dried slurries at a rotational speed 700 rpm for 10 minutes using a Herschel mixer, active materials were prepared by calcining the mixtures at 750 °C to obtain calcined products and classifying the calcined products.

**[Table 2]**

| Classification | | Primary particle size |
|---|---|---|
| Comparative Example 2 | SPL-1 | 0.40 µm |
| Comparative Example 3 | SPL-2 | 0.30 µm |
| Comparative Example 4 | SPL-3 | 0.20 µm |
| Comparative Example 5 | SPL-4 | 0.15 µm |
| Comparative Example 6 | SPL-5 | 0.10 µm |

### <Experimental Example> Measurement of SEM photographs

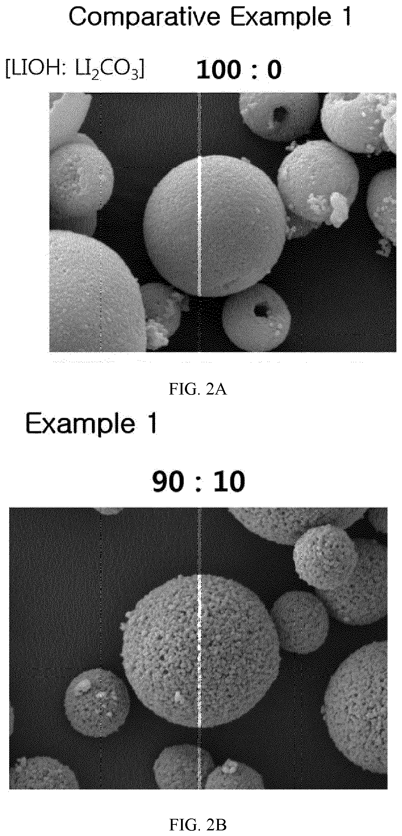

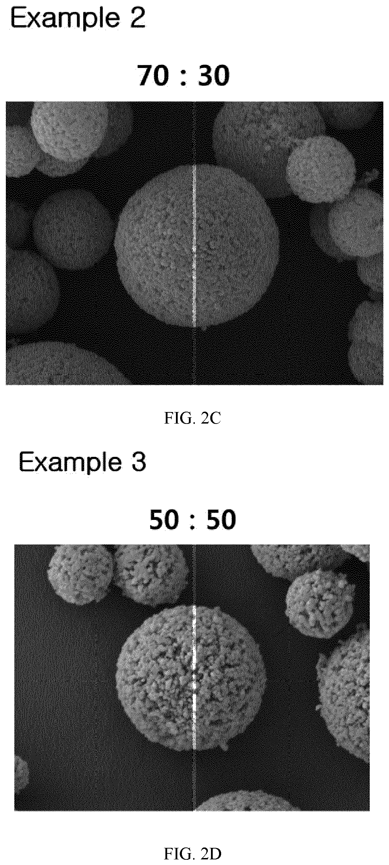

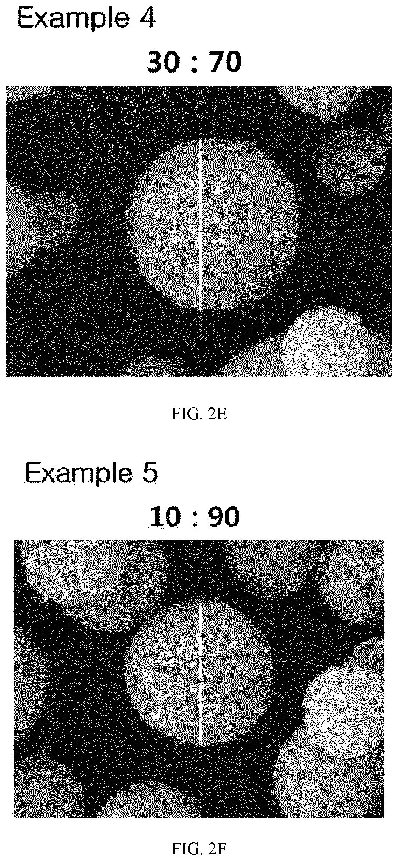

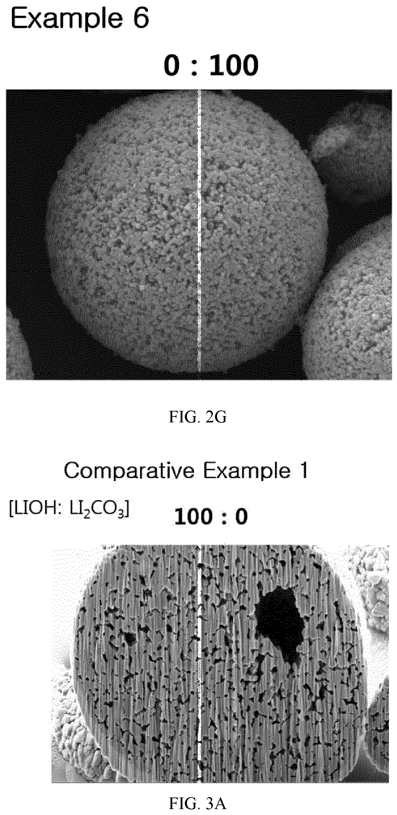

After measuring SEM photographs of the active materials prepared in Examples 1 to 6 and Comparative Example 1, measurement results are shown in FIG. 2 to FIG. 3.

In FIG. 2, it can be seen that the more contents of Li₂CO₃ added as a pore inducting material are increased, the more pores are formed within the particles, and it can be seen that formation ratios of doughnut shaped particles of the lithium-titanium complex oxides are low in secondary particles of lithium-titanium complex oxides of Examples 2 to 6 formed of primary particles having an average particle diameter of 0.12 µm. The doughnut shaped particles are formed in such a form that the electrode is easily crushed in the rolling process after manufacturing an electrode from the active material. Therefore, it has been known that the doughnut shaped particles can cause deterioration of battery capacity.

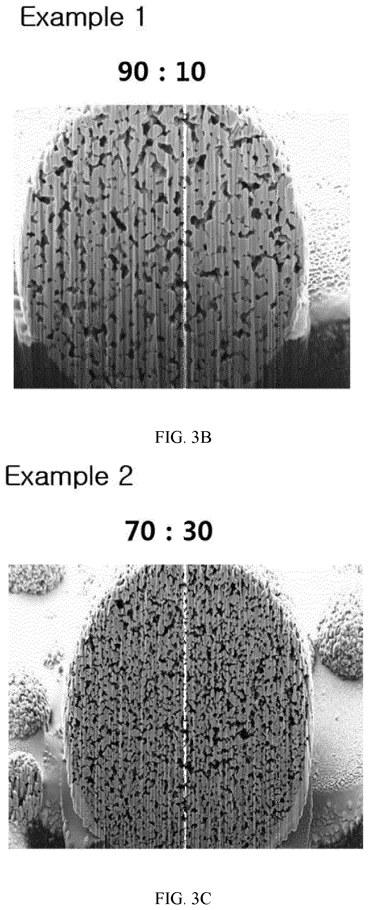

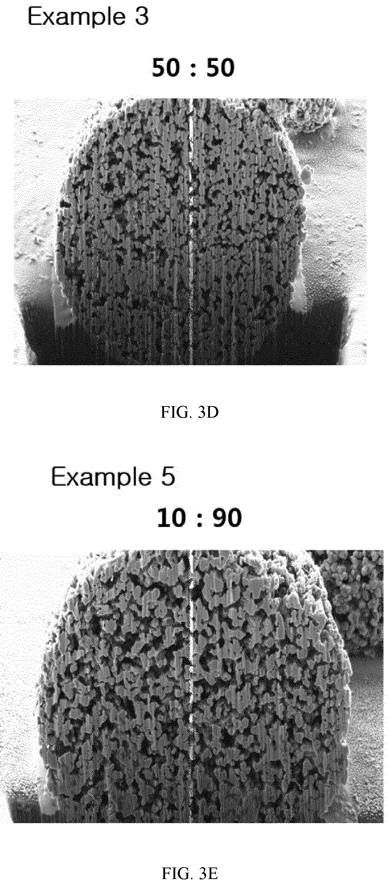

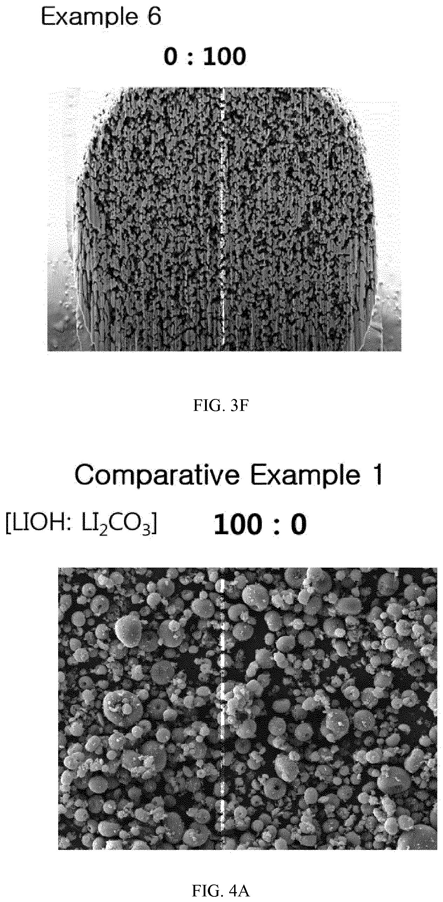

After preparing particles by varying addition amounts of Li₂CO₃ added as the pore inducing material, SEM photographs of cross-sections of the respective prepared particles are shown in FIG. 3. It can be seen in FIG. 3 that the more the addition amounts of Li₂CO₃ added as the pore inducing material are increased, the more uniformly pores are formed in the particles.

SEM results of the lithium-titanium complex oxides of Comparative Examples 2 to 6 of which primary particles have controlled particle sizes are shown in FIG. 3. As shown in FIG. 3, it can be seen that the smaller particles of the slurries become, the smaller primary particles of the active materials also become, and it can be seen that large amounts of doughnut shaped particles are generated when the primary particles of the slurries of Comparative Examples 2 to 6 to which the pore inducing compound is not added have a particle diameter D₅₀ of 0.2 µm or less.

### Experimental Example> Measurement of BET surface area

After measuring surface areas of the active materials prepared in Examples and Comparative Example 1 using BET equipment, measurement results are shown in Table 3.

In Table 3, since the more contents of Li₂CO₃ added as the pore inducting material are increased, the smaller and the more uniformly the pores are dispersed and formed to be, it can be seen that BET surface area values of 4.3 m³/g or more of Examples are increased than that of Comparative Example, and this, as a decarboxylation reaction due to Li₂CO₃ added as the pore inducting material, results from the formation of internal pores.

**[Table 3]**

| Classification | Active material | | |
|---|---|---|---|
| | Tap density | Pellet density | BET surface area |
| | [g/ml] | [g/cm³] | [m²/g] |
| Comparative Example | 0.81 | 1.76 | 3.4 |
| Example 1 | 1.18 | 1.72 | 5.3 |
| Example 2 | 0.98 | 1.67 | 5.8 |
| Example 3 | 0.87 | 1.71 | 5.9 |
| Example 4 | 0.77 | 1.72 | 6.0 |
| Example 5 | 0.70 | 1.71 | 6.8 |
| Example 6 | 0.75 | 1.71 | 7.7 |
| Example 7 | 1.15 | 1.76 | 4.7 |
| Example 8 | 1.13 | 1.74 | 5.0 |
| Example 9 | 1.10 | 1.73 | 5.1 |
| Example 10 | 1.08 | 1.71 | 5.5 |
| Example 11 | 1.15 | 1.77 | 4.4 |
| Example 12 | 1.15 | 1.75 | 4.6 |
| Example 13 | 1.13 | 1.75 | 4.6 |
| Example 14 | 1.11 | 1.74 | 4.7 |
| Example 15 | 1.16 | 1.78 | 4.3 |
| Example 16 | 1.15 | 1.76 | 4.5 |
| Example 17 | 1.16 | 1.76 | 4.5 |
| Example 18 | 1.15 | 1.75 | 4.6 |

### <Experimental Example> Measurement of tap densities and pellet densities

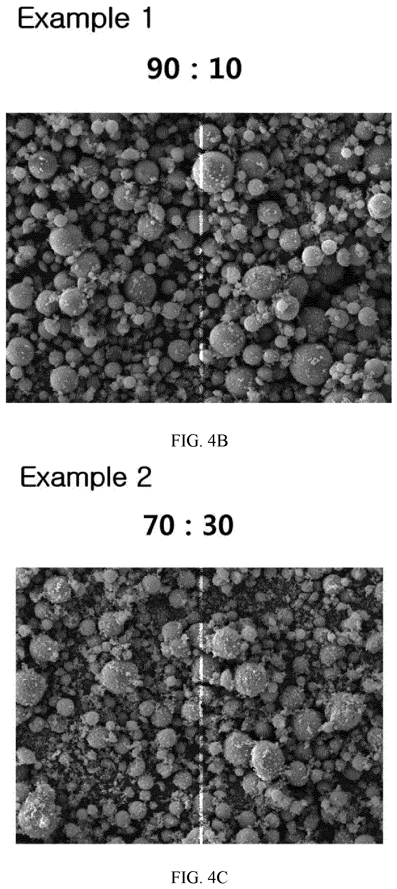

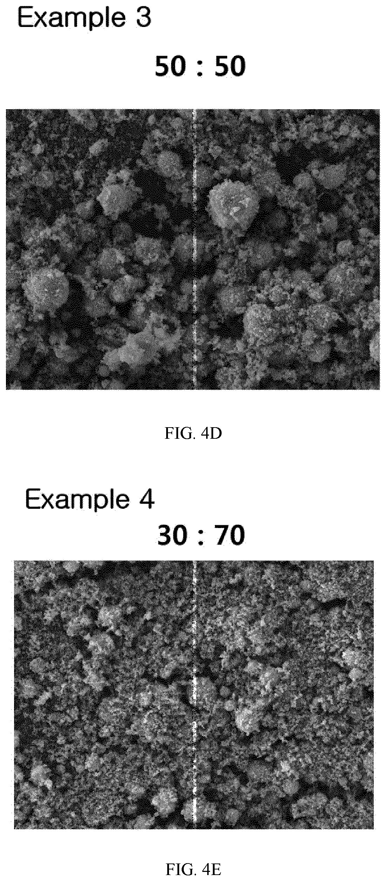

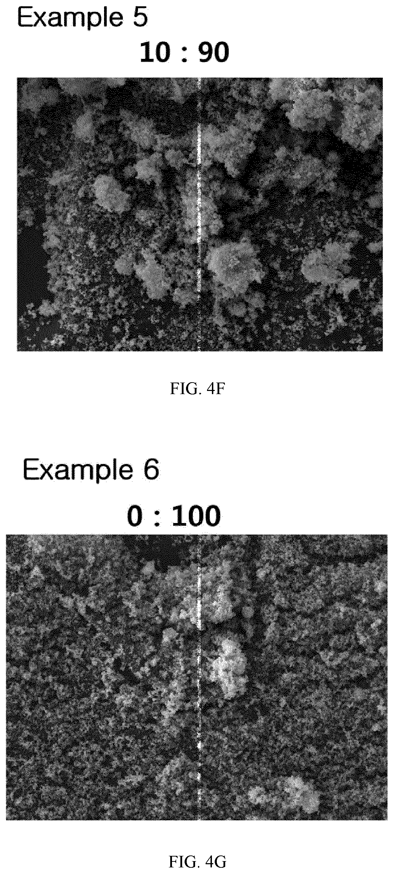

After measuring tap densities and pellet densities of the active materials prepared in Examples and Comparative Example 1, measurement results are shown in Table 1 and FIG. 4.

Table 1 shows that the more the contents of Li₂CO₃ added as the pore inducting material are increased, the more the tap densities are decreased.

After preparing particles by varying addition amounts of Li₂CO₃ added as the pore inducing material, SEM photographs of the prepared particles are shown in FIG. 4. It can be seen in FIG. 4 that the more the addition amounts of Li₂CO₃ added as the pore inducing material are increased, the more pellet densities are increased. This can be seen from a reason that, when the pore inducing material is added in an excessive amount, the pellet densities are rather increased while the particles are being cracked.

### Experimental Example> Measurement of pore volumes and pore sizes

After measuring pore volumes and pore sizes of the active materials prepared in Examples and Comparative Example 1, measurement results are shown in the following Table 4.

**[Table 4]**

| Items | Unit | LiOH : Li₂CO₃ | | | | | | |
|---|---|---|---|---|---|---|---|---|
| | | 100 : 0 | 90 : 10 | 70 : 30 | 50 : 50 | 30 : 70 | 10 : 90 | 0 : 100 |
| Pore volume | cm³/g | 0.0239 | 0.0231 | 0.0227 | 0.0223 | 0.0191 | 0.0190 | 0.0186 |
| Pore size | nm | 24.6575 | 17.9271 | 15.7095 | 15.2178 | 12.3167 | 11.5216 | 10.0913 |

It can be seen that the pore volumes and the pore sizes are decreased since the more addition amounts of Li₂CO₃ that is the pore inducing material are increased, the smaller and the more uniformly the pores are dispersed and formed to be.

### Experimental Example> Measurement of pore volumes and pore sizes

After measuring weight ratios of anatase phase TiO₂ to rutile phase TiO₂ from the active materials prepared in Examples and Comparative Example 1, measurement results are shown in the following Table 5.

It can be confirmed in the following Table 5 that the active materials prepared by the present invention comprise 3.0 wt% or less of the rutile phase TiO₂.

**[Table 5]**

| Ratio of Anatase phase TiO₂ to Rutile phase TiO₂ | | LiOH : Li₂CO₃ | | | | | | |
|---|---|---|---|---|---|---|---|---|
| | | 100 : 0 | 90: 10 | 70 : 30 | 50: 50 | 30: 70 | 10 : 90 | 0 : 100 |
| A-TiO₂ | % | 0.0 | 0.0 | 0.0 | 0.0 | 0.0 | 0.0 | 0.0 |
| R-TiO₂ | | 2.0 | 1.8 | 2.6 | 2.0 | 1.2 | 0.9 | 0.8 |

### <Manufacturing Example> Manufacturing of coin cells

Coin cells were manufactured from the active materials prepared in Examples and Comparative Example 1 according to a commonly known manufacturing process by using lithium metal as a counter electrode and a porous polyethylene film as a separator, and using a liquid electrolyte which is dissolved at 1 mol concentration in a solvent having ethylene carbonate and dimethyl carbonate mixed therein at a volume ratio of 1:2.

### Experimental Example> Evaluation of initial charge and discharge characteristics

After measuring initial charge and discharge characteristics at 0.1 C using an electrochemical analyzer in order to evaluate test cells comprising the active materials prepared in Examples and Comparative Example 1, measurement results are shown in Table 6.

### <Experimental Example> Evaluation of rate properties

After evaluating rate properties of the test cells by charging the test cells at 0.1 C and discharging the test cells at 0.1 C and 10 C using the electrochemical analyzer in order to evaluate test cells comprising the active materials prepared in Examples and Comparative Example 1, evaluation results are shown in Table 6.

**[Table 6]**

| Classification | Charge and discharge characteristics | | Rate properties |
|---|---|---|---|
| | 0.1 C Discharge | 0.1 C Efficiency | 10 C/0.1 C |
| | [mAh/g] | [%] | [%] |
| Comparative Example | 170.1 | 98.5 | 83 |
| Example 1 | 165.7 | 98.5 | 92 |
| Example 2 | 168.0 | 98.1 | 93 |
| Example 3 | 166.4 | 97.9 | 90 |
| Example 4 | 167.1 | 97.3 | 88 |
| Example 5 | 167.2 | 97.5 | 83 |
| Example 6 | 170.2 | 97.5 | 90 |
| Example 7 | 165.0 | 98.3 | 91 |
| Example 8 | 164.0 | 98.0 | 92 |
| Example 9 | 165.8 | 98.1 | 91 |
| Example 10 | 165.9 | 97.6 | 93 |
| Example 11 | 168.0 | 98.3 | 90 |
| Example 12 | 166.1 | 98.0 | 92 |
| Example 13 | 166.9 | 98.5 | 90 |
| Example 14 | 167.0 | 97.7 | 90 |
| Example 15 | 167.4 | 98.5 | 87 |
| Example 16 | 166.0 | 98.3 | 90 |
| Example 17 | 170.0 | 98.7 | 90 |
| Example 18 | 168.6 | 98.3 | 90 |

It can be confirmed in the above Table 6 that cells comprising active materials prepared by adding the pore inducing material by the present invention have greatly improved charge and discharge characteristics and rate properties.

A preparation method according to the present invention can prepare a lithium-titanium complex oxide which is prepared from a particle size-controlled slurry having sizes of primary particles reduced by adding a pore inducing material in the wet-milling step such that appropriate pores are contained within the particles.

Since a lithium-titanium complex oxide having sizes of the primary particles reduced, the lithium-titanium complex oxide prepared according to the preparation method according to the present invention shortens a moving distance of lithium ions by adding the pore inducing material, diffusion rate of the lithium ions is increased. Thereby, a battery comprising the lithium-titanium complex oxide according to the preparation invention exhibits excellent output characteristics as the lithium-titanium complex oxide becomes favorable to electron transport.

| Comparative Example | 0.81 | 1.76 | 3.4 |
|---|---|---|---|
| Example 1 | 1.18 | 1.72 | 5.3 |
| Example 2 | 0.98 | 1.67 | 5.8 |
| Example 3 | 0.87 | 1.71 | 5.9 |
| Example 4 | 0.77 | 1.72 | 6.0 |
| Example 5 | 0.70 | 1.71 | 6.8 |
| Example 6 | 0.75 | 1.71 | 7.7 |
| Example 7 | 1.15 | 1.76 | 4.7 |
| Example 8 | 1.13 | 1.74 | 5.0 |
| Example 9 | 1.10 | 1.73 | 5.1 |
| Example 10 | 1.08 | 1.71 | 5.5 |
| Example 11 | 1.15 | 1.77 | 4.4 |
| Example 12 | 1.15 | 1.75 | 4.6 |
| Example 13 | 1.13 | 1.75 | 4.6 |
| Example 14 | 1.11 | 1.74 | 4.7 |
| Example 15 | 1.16 | 1.78 | 4.3 |
| Example 16 | 1.15 | 1.76 | 4.5 |
| Example 17 | 1.16 | 1.76 | 4.5 |
| Example 18 | 1.15 | 1.75 | 4.6 |

### <Experimental Example> Measurement of tap densities and pellet densities

After measuring tap densities and pellet densities of the active materials prepared in Examples and Comparative Example 1, measurement results are shown in Table 1 and FIG. 4A to 4G.

Table 1 shows that the more the contents of Li₂CO₃ added as the pore inducting material are increased, the more the tap densities are decreased.

After preparing particles by varying addition amounts of Li₂CO₃ added as the pore inducing material, SEM photographs of the prepared particles are shown in FIG. 4A to 4G. It can be seen in FIG. 4A to 4G that the more the addition amounts of Li₂CO₃ added as the pore inducing material are increased, the more pellet densities are increased. This can be seen from a reason that, when the pore inducing material is added in an excessive amount, the pellet densities are rather increased while the particles are being cracked.

### <Experimental Example> Measurement of pore volumes and pore sizes

After measuring pore volumes and pore sizes of the active materials prepared in Examples and Comparative Example 1, measurement results are shown in the following Table 4.

**[Table 4]**

| Items | Unit | LiOH : Li₂CO₃ | | | | | | |
|---|---|---|---|---|---|---|---|---|
| | | 100 : 0 | 90 : 10 | 70 : 30 | 50 : 50 | 30 : 70 | 10 : 90 | 0 : 100 |
| Pore volume | cm³/g | 0.0239 | 0.0231 | 0.0227 | 0.0223 | 0.0191 | 0.0190 | 0.0186 |
| Pore size | nm | 24.6575 | 17.9271 | 15.7095 | 15.2178 | 12.3167 | 11.5216 | 10.0913 |

It can be seen that the pore volumes and the pore sizes are decreased since the more addition amounts of Li₂CO₃ that is the pore inducing material are increased, the smaller and the more uniformly the pores are dispersed and formed to be.

### <Experimental Example> Measurement of weight ratios of anatase phase TiO₂ to rutile phase TiO₂

After measuring weight ratios of anatase phase TiO₂ to rutile phase TiO₂ from the active materials prepared in Examples and Comparative Example 1, measurement results are shown in the following Table 5.

It can be confirmed in the following Table 5 that the active materials prepared by the present invention comprise 3.0 wt% or less of the rutile phase TiO₂.

**[Table 5]**

| Ratio of Anatase phase TiO₂ to Rutile phase TiO₂ | | LiOH : Li₂CO₃ | | | | | | |
|---|---|---|---|---|---|---|---|---|
| | | 100 : 0 | 90 : 10 | 70 : 30 | 50 : 50 | 30 : 70 | 10 : 90 | 0 : 100 |
| A-TiO₂ | % | 0.0 | 0.0 | 0.0 | 0.0 | 0.0 | 0.0 | 0.0 |
| R-TiO₂ | | 2.0 | 1.8 | 2.6 | 2.0 | 1.2 | 0.9 | 0.8 |

### <Manufacturing Example> Manufacturing of coin cells

Coin cells were manufactured from the active materials prepared in Examples and Comparative Example 1 according to a commonly known manufacturing process by using lithium metal as a counter electrode and a porous polyethylene film as a separator, and using a liquid electrolyte which is dissolved at 1 mol concentration in a solvent having ethylene carbonate and dimethyl carbonate mixed therein at a volume ratio of 1:2.

### <Experimental Example> Evaluation of initial charge and discharge characteristics

After measuring initial charge and discharge characteristics at 0.1 C using an electrochemical analyzer in order to evaluate test cells comprising the active materials prepared in Examples and Comparative Example 1, measurement results are shown in Table 6.

### <Experimental Example> Evaluation of rate properties

After evaluating rate properties of the test cells by charging the test cells at 0.1 C and discharging the test cells at 0.1 C and 10 C using the electrochemical analyzer in order to evaluate test cells comprising the active materials prepared in Examples and Comparative Example 1, evaluation results are shown in Table 6.

**[Table 6]**

| Classification | Charge and discharge characteristics | | Rate properties |
|---|---|---|---|
| | 0.1 C Discharge | 0.1 C Efficiency | 10 C/0.1 C |
| | [mAh/g] | [%] | [%] |
| Comparative Example | 170.1 | 98.5 | 83 |
| Example 1 | 165.7 | 98.5 | 92 |
| Example 2 | 168.0 | 98.1 | 93 |
| Example 3 | 166.4 | 97.9 | 90 |
| Example 4 | 167.1 | 97.3 | 88 |
| Example 5 | 167.2 | 97.5 | 83 |
| Example 6 | 170.2 | 97.5 | 90 |
| Example 7 | 165.0 | 98.3 | 91 |
| Example 8 | 164.0 | 98.0 | 92 |
| Example 9 | 165.8 | 98.1 | 91 |
| Example 10 | 165.9 | 97.6 | 93 |
| Example 11 | 168.0 | 98.3 | 90 |
| Example 12 | 166.1 | 98.0 | 92 |
| Example 13 | 166.9 | 98.5 | 90 |
| Example 14 | 167.0 | 97.7 | 90 |
| Example 15 | 167.4 | 98.5 | 87 |
| Example 16 | 166.0 | 98.3 | 90 |
| Example 17 | 170.0 | 98.7 | 90 |
| Example 18 | 168.6 | 98.3 | 90 |

It can be confirmed in the above Table 6 that cells comprising active materials prepared by adding the pore inducing material by the present invention have greatly improved charge and discharge characteristics and rate properties.

A preparation method according to the present invention can prepare a lithium-titanium complex oxide which is prepared from a particle size-controlled slurry having sizes of primary particles reduced by adding a pore inducing material in the wet-milling step such that appropriate pores are contained within the particles.

Since a lithium-titanium complex oxide having sizes of the primary particles reduced, the lithium-titanium complex oxide prepared according to the preparation method according to the present invention shortens a moving distance of lithium ions by adding the pore inducing material, diffusion rate of the lithium ions is increased. Thereby, a battery comprising the lithium-titanium complex oxide according to the preparation invention exhibits excellent output characteristics as the lithium-titanium complex oxide becomes favorable to electron transport.

## Claims

1. A preparation method of a lithium-titanium complex oxide having a molar ratio of lithium to titanium Li/Ti ratio of 0.80 to 0.85 the preparation method comprising:
a first step of solid phase-mixing a pore inducing compound, a titanium compound, and a Zr-containing compound at a stoichiometric ratio to obtain a solid phase mixture;
a second step of preparing a slurry in which primary particles are dispersed by dispersing the solid phase mixture in a solvent and wet-milling the solid phase mixture dispersed in the solvent;
a third step of forming secondary particles by spray drying the slurry;
a fourth step of mixing the spray dried particles with a lithium-containing compound to obtain lithium compound-mixed particles;
a fifth step of calcining the lithium compound-mixed particles to obtain calcined particles; and
a sixth step of classifying the calcined particles,
wherein the pore inducing compound comprises one or more selected from lithium carbonate (Li₂CO₃), sodium bicarbonate (NaHCO₃), and potassium carbonate (K₂CO₃),
the primary particle in the second step has an average particle diameter D50 of 0.05 to 0.4 µm, and
the sixth step comprises classifying the calcined particles to a particle size corresponding to a sieve size of 200 to 400 meshes.

2. The preparation method of claim 1, wherein the titanium compound is one or more selected from the group consisting of titanium dioxide (TiO₂), titanium chloride, titanium sulfide, and titanium hydroxide.

3. The preparation method of claim 1, wherein the wet-milling process in the second step comprises wet-milling the solid phase mixture dispersed in the solvent by using water as the solvent and using zirconia beads having a rotational speed of 2,000 to 5,000 rpm.

4. The preparation method of claim 1, wherein the third step of performing the spray drying process comprises spray drying the slurry at a hot air input temperature of 200 to 300 °C and a hot air exhaust temperature of 100 to 150 °C.

5. The preparation method of claim 1, wherein the second particles obtained by spray drying the slurry in the third step have a diameter D₅₀ of 5 to 20 µm.

6. The preparation method of claim 1, wherein the lithium-containing compound in the fourth step is lithium hydroxide (LiOH) or lithium carbonate (Li₂CO₃).

7. The preparation method of claim 4, wherein the calcination process in the fifth step is performed at a temperature of 700 to 800 °C in an air atmosphere for 10 to 20 hours.

## Patentansprüche

1. Herstellungsverfahren für ein Lithium-Titan-Verbundoxid mit einem molaren Verhältnis von Lithium zu Titan (Li/Ti-Verhältnis) von 0,80 bis 0,85, wobei das Herstellungsverfahren umfasst:
einen ersten Schritt eines Festphasenmischens einer poreninduzierenden Verbindung, einer Titan-Verbindung, und einer Zr-enthaltenen Verbindung in einem stöchiometrischen Verhältnis, um ein Festphasengemisch zu erhalten;
einen zweiten Schritt des Herstellens einer Aufschlämmung, in der primäre Partikel dispergiert werden durch Dispergieren des Festphasengemisches in einem Lösungsmittel und Nassmahlen des in dem Lösungsmittel dispergierten Festphasengemisches;
einen dritten Schritt der Bildung sekundärer Partikel durch Sprühtrocknung der Aufschlämmung;
einen vierten Schritt des Mischens der sprühgetrockneten Partikel mit einer Lithium enthaltenden Verbindung, um mit einer Lithium-Verbindung gemischte Partikel zu erhalten;
einen fünften Schritt des Kalzinierens der mit einer Lithium-Verbindung gemischten Partikel, um kalzinierte Partikel zu erhalten;
und
einen sechsten Schritt des Klassifizierens der kalzinierten Partikel,
wobei die poreninduzierende Verbindung einen oder mehrere Vertreter umfasst, ausgewählt unter Lithiumcarbonat (Li₂CO₃), Natriumbicarbonat (NaHCO₃), und Kaliumcarbonat (K₂CO₃),
das primäre Partikel im zweiten Schritt einen durchschnittlichen Partikeldurchmesser D50 von 0,05 bis 0,4 µm aufweist, und
der sechste Schritt das Klassifizieren der kalzinierten Partikel auf eine Partikelgröße umfasst, die einer Siebgröße von 200 bis 400 Maschen entspricht.

2. Herstellungsverfahren nach Anspruch 1, wobei es sich bei der Titan-Verbindung um einen oder mehrere Vertreter handelt, ausgewählt aus der Gruppe, die aus Titandioxid (TiO₂), Titanchlorid, Titansulfid, und Titanhydroxid besteht.

3. Herstellungsverfahren nach Anspruch 1, wobei das Nassmahl-Verfahren im zweiten Schritt ein Nassmahlen des in dem Lösungsmittel dispergierten Festphasengemisches unter Verwendung von Wasser als Lösungsmittel und unter Verwendung von Zirkonia-Perlen mit einer Rotationsgeschwindigkeit von 2000 bis 5000 U/min umfasst.

4. Herstellungsverfahren nach Anspruch 1, wobei der dritte Schritt der Durchführung des Sprühtrocknungsverfahrens eine Sprühtrocknung der Aufschlämmung bei einer Heißluft-Zufuhrtemperatur von 200 bis 300 °C und einer Heißluft-Abgastemperatur von 100 bis 150 °C umfasst.

5. Herstellungsverfahren nach Anspruch 1, wobei die durch Sprühtrocknung der Aufschlämmung im dritten Schritt erhaltenen sekundären Partikel einen Durchmesser D₅₀ von 5 bis 20 µm aufweisen.

6. Herstellungsverfahren nach Anspruch 1, wobei die Lithium enthaltende Verbindung im vierten Schritt Lithiumhydroxid (LiOH) oder Lithiumcarbonat (Li₂CO₃) ist.

7. Herstellungsverfahren nach Anspruch 4, wobei das Kalzinierungsverfahren im fünften Schritt bei einer Temperatur von 700 bis 800 °C in einer Luftatmosphäre für 10 bis 20 Stunden durchgeführt wird.

## Revendications

1. Procédé de préparation d'un oxyde complexe de lithium-titane présentant un rapport molaire lithium/titane Li/Ti de 0,80 à 0,85, le procédé de préparation comprenant : une première étape de mélange en phase solide d'un composé inducteur de pores, d'un composé de titane et d'un composé contenant du Zr selon un rapport stœchiométrique pour obtenir un mélange en phase solide ; une deuxième étape de préparation d'une suspension dans laquelle des particules primaires sont dispersées en dispersant le mélange en phase solide dans un solvant et en effectuant un broyage humide du mélange en phase solide dispersé dans le solvant ; une troisième étape de formation de particules secondaires par séchage par pulvérisation de la suspension ; une quatrième étape de mélange des particules séchées par pulvérisation avec un composé contenant du lithium pour obtenir des particules mélangées avec le composé de lithium ; une cinquième étape de calcination des particules mélangées avec le composé de lithium pour obtenir des particules calcinées ; et une sixième étape de classification des particules calcinées, dans lequel le composé inducteur de pores comprend un ou plusieurs composés choisis parmi le carbonate de lithium (Li₂CO₃), le bicarbonate de sodium (NaHCO₃) et le carbonate de potassium (K₂CO₃), les particules primaires dans la deuxième étape présentent un diamètre moyen de particule D₅₀ de 0,05 à 0,4 µm, et la sixième étape comprend la classification des particules calcinées à une taille de particule correspondant à une taille de tamis de 200 à 400 mesh.

2. Procédé de préparation selon la revendication 1, dans lequel le composé de titane est un ou plusieurs composés choisis dans le groupe constitué du dioxyde de titane (TiO₂), du chlorure de titane, du sulfure de titane et de l'hydroxyde de titane.

3. Procédé de préparation selon la revendication 1, dans lequel le processus de broyage humide dans la deuxième étape comprend le broyage humide du mélange en phase solide dispersé dans le solvant en utilisant l'eau comme solvant et en utilisant des billes de zircone présentant une vitesse de rotation de 2 000 à 5 000 tr/min.

4. Procédé de préparation selon la revendication 1, dans lequel la troisième étape consistant à effectuer le processus de séchage par pulvérisation comprend le séchage par pulvérisation de la suspension à une température d'entrée d'air chaud de 200 à 300 °C et une température d'échappement d'air chaud de 100 à 150 °C

5. Procédé de préparation selon la revendication 1, dans lequel les secondes particules obtenues par séchage par pulvérisation de la suspension dans la troisième étape présentent un diamètre D₅₀ de 5 à 20 µm.

6. Procédé de préparation selon la revendication 1, dans lequel le composé contenant du lithium dans la quatrième étape est l'hydroxyde de lithium (LiOH) ou le carbonate de lithium (Li₂CO₃).

7. Procédé de préparation selon la revendication 4, dans lequel le processus de calcination dans la cinquième étape est effectué à une température de 700 à 800 °C dans une atmosphère d'air pendant 10 à 20 heures.
